# EUROPEAN PATENT APPLICATION

(11) **EP 2 224 064 A1**
(43) Date of publication of application: **01.09.2010**
(21) Application number: 10154719.8
(22) Date of filing: 25.02.2010
(51) Int. Cl.: E03B 3/02

(54) **Rainwaterfiltersystem**

(30) Priority: 25.02.2009 BE 200900113
(71) Applicant: Devaplus, 9230 Wetteren (BE); De Valck, Filip, 9230 Wetteren (BE)
(72) Inventor: De Valck, Filip, B - 9230, Wetteren (BE)
(74) Representative: Luys, Marie-José A.H.

(57) **Abstract**

Rainwaterfiltersystem (1) for the filtering of collected rainwater, with an inlet channel (2), a filtration channel (3) with a filtration element (7) and an outlet channel (4), **characterized in that** the filtration element (7) is installed in a bowl-shaped part (8) of the system which is curved in the guiding direction (6) of the collected rainwater and is provided to to keep the collected rainwater at least temporary above the filtration element (7).

## Description

The invention relates to a rainwaterfiltersystem as described in the preamble of the first claim.

Such rainwaterfiltersystems have already been described for example in DE8800277U. DE8800277U describes a rainwaterfiltersystem for the partial filtration of collected rainwater. The rainwater is collected on, for example, a roof and is further guided by roof gutters to an inlet channel. The inlet channel guides the water to a filtration channel. The filtration channel is a tube-shaped element that guides a first part of the collected rainwater to an outlet channel along a guiding surface of the inlet channel, filtration channel and outlet channel. The outlet channel is provided to further guide the first part of the water to for example a sewer. The filtration channel is a cylinder-shaped channel with a smooth wall wherein the smooth wall is situated in substantially the same surface as the inner wall of the in- and outlet channel. In the surface of the guiding surface a filtration element is provided. A second part of the collected rainwater is led through the filtration element and is in that way filtered. This way, the filtration element stops impurities with a diameter larger than the meshes of the filter as a result of which these impurities stay in the first part and the second part comprises relatively less impurities than the first part. The second part is in this way more purified than the first part and can, independently of the diameter of the meshes of the filter, be made suitable for rinsing toilets, irrigating gardens, for use in washing machines, cleaning, etc. Since impurities stay behind in the filtration element during use, the meshes of the filtration element are filled with impurities in the course of time as a result of which the filter can pass less and sometimes even an insufficient amount of water. As a consequence it is necessary to clean the filtration element after some time. Thereto the filtration channel is usually installed in a detachable way between the in- and outlet channel as a result of which the filtration channel can be removed from between the in- and outlet channel to clean the filtration element, as is for example shown in DE-A1-100 48 740. This is however a time-consuming action.

A second example of such a system is described in DE-U1-296 14 817 that describes a rainwaterfiltersystem for the filtration of collected rainwater. The system comprises an inlet channel for supplying collected rainwater to a filtration channel. The filtration channel is provided to guide a first part of the collected rainwater from the inlet channel to an outlet channel along a guiding surface of the inlet-, filtration- and outlet channel. The inlet, filtration and outlet channel are provided to guide the collected rainwater along a guiding direction and for the filtration and the guiding of a second part of the collected rainwater through a sieve provided in the surface of the guiding surface. The guiding surface comprises no curve along the guiding direction and is only curved along a direction that is perpendicular to the guiding direction.

EP-A2-0 786 560 describes a rainwaterfiltersystem for the filtration of collected rainwater. The system comprises an inlet channel for the supply of collected rainwater to a filtration channel. The filtration channel is provided to guide a first part of the collected rainwater from the inlet channel to an outlet channel along a guiding surface of the inlet, filtration and outlet channel. The inlet, filtration and outlet channel are provided to guide the collected rainwater along a guiding direction and for the filtration and guiding of a second part of the collected rainwater through a sieve installed in the surface of the guiding surface. The guiding surface is however not smooth at the position of the filtration element, but is undulated due to an undulation in the sieve along the guiding direction curved.This undulation allows that despite the fact that small meshes are used in the sieve, a relatively large quantity of water can still move through the sieve. EP-A2-0 786 560 describes that such an action is caused by a turbulent flow under the influence of the undulations applied in the sieve. The thus obtained effect is however very dependant on the slope of the sieve and is not linked to impurities that stay behind in the sieve out of necessity.

It is thus a goal of the invention to provide a rainwaterfiltersystem wherein the need to clean the filtration element, decreases.

Thereto the filtration system according to the present invention is **characterized in that** the filtration element is installed in a bowl-shaped part of the guiding surface, the bowl-shaped part being curved in the guiding direction of the water, and being provided to keep unpurified collected rainwater at least temporary above the filtration element.

Such a rainwaterfiltersystem has the advantage that due the bowl-shape in the guiding surface in the bowl-shaped part of the guiding surface, a part of the collected rainwater , is kept at least temporarily above the filtration element. Because of this, this part of the collected rainwater has during a longer time, the opportunity to flow through the filtration element as a result of which a larger quantity of collected rainwater has the opportunity to flow through the filtration element, despite impurities in or on the filtration element, as a result of which the second part increases in volume and as a consequence one can wait a longer time to clean the filtration element. In preferred embodiments of the rainwaterfiltersystem according to the present invention, the guiding surface is substantially smooth. Such a rainwaterfiltersystem offers the advantage that a good flow-through of the collected rainwater can be obtained and it is avoided that solid parts of the stream of collected rainwater, prevent a fluent passing of the collected rainwater along the guiding surface.

In preferred embodiments the bowl-shaped part is deeper than the average thickness of the surrounding guiding surface. Preferably the bowl-shaped part is at least 2 times deeper than the average thickness of the surrounding guiding surface. More preferably the bowl-shaped part is at least 3 times deeper than the average thickness of the surrounding guiding surface. Most preferably the depth of the bowl-shaped part is between 3 to 5 times deeper than the average thickness of the surrounding guiding surface. The average thickness of an artificial tube in rainwater systems is for example between 3 mm - 4 mm. The depth of the bowl-shaped part according to the present invention is for example approximately 15 mm. As a result of which the depth in the bowl-shaped part in this application is between 3.75 to 5 times as large as the average thickness of the surrounding guiding surface.

In preferred embodiments of the rainwaterfiltersystem according to the present invention, the filtration element is substantially provided on a position which, after installation of the filtration channel between the inlet channel and the outlet channel, substantially comprises the lowest point of the bowl-shaped part. Such a filtration element allows more of the collected water present in the bowl-shaped part to get the opportunity to flow through the filter for a longer period of time as a result of which the second part further increase and the time between cleanings of the filtration element can increase.

In further preferred embodiments of the rainwaterfiltersystem according to the present invention, the filtration channel is installed in a removable way between the inlet channel and the outlet channel. Such an installation of the filtration channel allows the filtration channel to be more easily removed from between the inlet channel and the outlet channel as a result of which the filtration element becomes more easily accessible for, for example cleaning.

In further preferred embodiments of the rainwaterfiltersystem according to the present invention, the filtration channel is installed in a clamp-fit way between the inlet channel and the outlet channel. Such an installation allows to remove the filtration channel easily and without the use of further tools, whereas the chance that the filtration channel unwantedly leaves its correct position between the inlet channel and the outlet channel unwanted, decreases.

In further preferred embodiments of the rainwaterfiltersystem according to the present invention, the filtration channel is installed in a removable way according to a substantially upward direction. Since the filtration channel according to the present invention usually is installed above a small well, wherein the well is provided to collect the second part, the horizontal moving space around the filtration channel to remove the filtration channel is often limited, as a result of which a filtration channel which is removable in an upward direction, is considerably easier to remove.

In further preferred embodiments of the rainwaterfiltersystem according to the present invention, the filtration channel is connected to the inlet channel along the guiding surface by a first protruding part of the inlet channel onto which a first end of the filtration channel rests. In further preferred embodiments of the rainwaterfiltersystem according to the present invention, the filtration channel is connected along the guiding surface to the outlet channel by a second protruding part of the outlet channel onto which a second end of the filtration channel rests. More preferably the first and/or second protruding part and the first and/or second end comprise a cooperating set of a rib and a groove for the installation of the filtration channel to the in- and/or outlet channel. Such an embodiment allows a positioning of the filtration channel between the inlet channel and the outlet channel in the guiding direction.

In further preferred embodiments of the rainwaterfiltersystem the cooperating set of the rib and the groove are provided with a sealing. Such a sealing allows an improved watertight connection between the inlet channel and/or the outlet channel on the one hand and the filtration channel on the other hand.

The invention will be further elucidated by the description given below and the enclosed figures of preferred embodiments of the rainwaterfilter according to this invention.

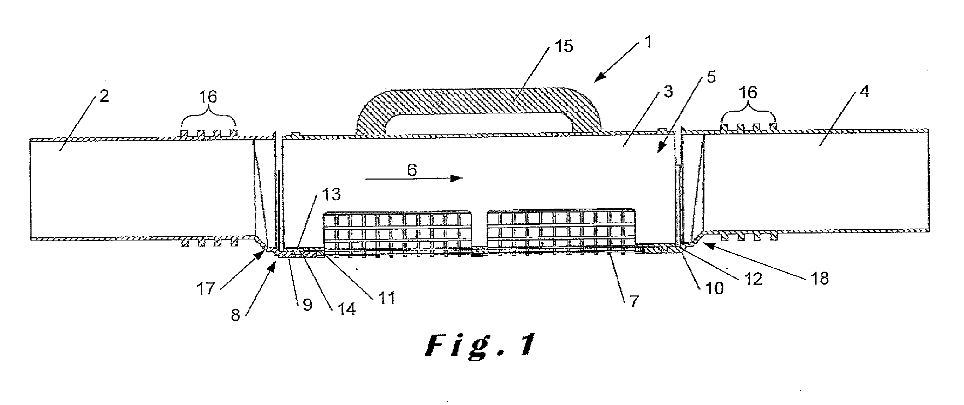

Figure 1 presents a section of a rainwaterfiltersystem according to the invention.

The rainwaterfiltersystem shown in figure 1 comprises an inlet channel 2, a filtration channel 3 and an outlet channel 4. The inlet channel 2 supplies collected rainwater to the filtration channel 3. The filtration channel 3 leads a first part of the collected rainwater from the inlet channel 2 to the outlet channel 4 along a guiding surface 5 of the inlet channel 2, filtration channel 3, outlet channel 4 along a guiding direction 6. A second part of the collected rainwater is guided by the filtration channel 3 through a filtration element 7. The filtration element 7 is positioned in the surface of the guiding surface.

The inlet channel 2 is provided to supply rainwater to the rainwaterfiltersystem 1. Thereto, the inlet channel 2 is for example connected to means that collect rainwater such as for example a drainage system, roof gutters, a water well, tubing, etc. Preferably the inlet channel 2 is provided to be installed on known standard plastic tubes with an outside diameter of usually 110 mm, 125 mm, 160 mm, 200 mm, 250 mm, 314 mm and 400 mm.

The inlet channel 2 shown in figure 1 is cylindrical and has a closed round section. This is however not required for the invention and the inlet channel 2 can for example also have an open top side and/or a square, rectangular, etc. section. A circumferential wall with a closed section however has the advantage that a larger volume of water can be processed without increasing the risk of water being released from the inlet channel 2. An inlet channel 2 with a closed section also offers the advantage that such an inlet channel 2 can be installed underground more easily since the closed section prevents external particles to end up in the stream of collected rainwater. A section with a round shape offers the advantage that solid particles stay behind in the inlet channel 2 more difficultly, for example in corners.

The inlet channel 2 is preferably made out of plastic, such as for example PVC, polyethylene and polypropylene, etc., but it can also be made out of different materials such as for example, inox, cupper, etc.

The inlet channel 2 is preferably adapted to be build in a wall. The inlet channel 2 thereto preferably comprises means that allow the grip between the inlet channel 2 and for example cement or other glues, to be increased in comparison with the grip between the cement or the other glue and a substantially smooth wall of the inlet channel 2. Preferably such means comprise a rough surface applied onto the outer surface of the inlet channel or one or more protrusions 16 that are positioned onto the outer surface of the inlet channel 2. Preferably the protrusions 16 extend transversely of the inlet channel 2 which improves the positioning of the inlet channel 2 in longitudinal direction. More preferably, the protrusions 16 extend over substantially the whole circumferential direction of the inlet channel 2 as a result of which the contact surface increases and the grip further increases. Although figure 1 shows 4 protrusions 16, it is also possible to provide less or more of such protrusions 16, such as for example one, two, three, five, six, seven, eight, nine, et. The dimensions and shape of the protrusions can further be determined by the person skilled in the art depending on the required grip and the used materials.

The inlet channel 2 shown in figure 1 has an end 17 that is provided to be connected to the filtration channel 3. Preferably the filtration channel 3 is connected to the inlet channel 2 along the guiding surface 5 by a first protruding part 9 of the inlet channel 2 onto which a first end 11 of the filtration channel 3 rests. Although the first protruding part 9 shown in figure 1 is only provided at the bottom side of the inlet channel 2, the first protruding part 9 can also be provided at the top side of the inlet channel 2 along substantially the full circumference of the circumferential wall of the inlet channel 2 and in this way comprise the first end 11 of the filtration channel 3. Alternative means to connect the filtration channel 3 to the inlet channel 2 are however also possible such as for example by means of a socket, brackets, joints, bolts, etc.

Preferably the first protruding part 9 and the first end 11 of the filtration channel 3 comprise a cooperating set of a rib 13 and a groove 14. In a first embodiment shown in figure 1 the first end 11 of the filtration channel 3 comprises the rib 13 and the first protruding part 9 of the inlet channel 2 comprises the groove 14. This is however not required for the invention and the first protruding part 9 of the inlet channel 2 can also comprise the rib 13 and the first end 11 of the filtration channel 3 can also comprise the groove 14.

Although this is not shown in figure 1, the set of rib 13 and groove 14 installed in the first end 11 of the filtration channel 3 and the first protruding part 9 of the inlet channel 2 can for example be provided to make the connection between rib 13 and groove 14 more watertight. This can for example be accomplished by a applying a sealing, for example a sealing ring. Such a construction is however not required for the invention.

The outlet channel 4 is provided to guide off rainwater, more specifically the first part of the collected rainwater, away from the filtration channel 3. Thereto the outlet channel 4 is for example connected to for example a sewer, etc. Preferably the outlet channel 4 is provided to be installed onto known standard plastic tubes with an outer diameter of usually 110 mm, 125 mm, 160 mm, 200 mm, 250 mm, 314 mm and 400 mm.

The outlet channel 4 shown in figure 1 is cylindrical and has a round closed section. This is however not required for the invention and the outlet channel 4 can also have an open top side and/or a square, rectangular, polygonal, etc. section. A circumferential wall however has the advantage that a larger volume of water can be processed without increasing the risk of the water being released from the outlet channel 4. An outlet channel 4 with a closed section also offers the advantage that such an outlet channel 4 can be more easily installed underground since the closed section prevents external particles to end up the in the stream of collected rainwater. A section with a round shape offers the advantage that solid particles stay behind in the outlet channel 4 more difficultly, for example in corners.

The outlet channel 4 is preferably made out of plastic, such as for example PVC, polyethylene and polypropylene, etc., but it can also be made out of different materials such as for example, inox, cupper, etc.

The outlet channel 4 is preferably adapted to be built in a wall. The outlet channel 4 thereto preferably comprises means that allow the grip between the inlet channel 2 and for example cement or other glues, to be increased in comparison with the grip between the cement or the other glue and a substantially smooth wall of the outlet channel 4. Preferably such means comprise a rough surface applied onto the outer surface of the inlet channel or one or more protrusions 16 that are positioned onto the outer surface of the outlet channel 4. Preferably the protrusions 16 extend transversely of the outlet channel 4 which improves the positioning of the outlet channel 4 in longitudinal direction. More preferably the protrusions 16 extend over substantially the whole circumferential direction of the outlet channel 4 as a result of which the contact surface increases and the grip further increases. Although figure 1 shows 4 protrusions 16, it is also possible to provide less or more of such protrusions 16, such as for example one, two, three, five, six, seven, eight, nine, etc. The dimensions and shape of the protrusions can further be determined by the person skilled in the art dependent of the required grip and the used materials.

The outlet channel 4 shown in figure 1 has an end 18 that is provided to be connected to the filtration channel 3. Preferably the filtration channel 3 is connected to the outlet channel 4 along the guiding surface 5 by a second protruding part 10 of the outlet channel 4 onto which a second end 12 of the filtration channel 3 rests. Although the second protruding part 10 shown in figure 1 is only provided at the bottom side of the outlet channel 4, the second protruding part 10 can also be provided at the top side of the outlet channel 4 along substantially the full circumference of the circumferential wall of the outlet channel 4 and in this way comprise the second end 12 of the filtration channel 3. Alternative means to connect the filtration channel 3 to the outlet channel 4 are however also possible such as for example by means of a socket, brackets, joints, bolts, etc.

Preferably, the second protruding part 10 and the second end 12 of the filtration channel 3 comprise a cooperating set of a rib 13 and a groove 14. In a first embodiment shown in figure 1, the second end 12 of the filtration channel 3 comprises the rib 13 and the second protruding part 10 of the outlet channel comprises the groove 14. This is however not required for the invention and the second protruding part 10 of the outlet channel 4 can also comprise the rib 13 and the second and the second end 12 of the filtration channel 3 can also comprise the groove 14.

Although this is not shown in figure 1, the set of rib 13 and groove 14 can be installed in the second end of the filtration channel 3 and the second protruding part 10 of the inlet channel 2 can for example be provided to make the connection between rib 13 and groove 14 more watertight. This can for example be accomplished by providing a sealing, such as for example a sealing ring. Such a construction is however not required for the invention.

The filtration channel 3 shown in figure 1 is cylinder-shaped and has a round section. This is however not required for the invention and the filtration channel according to the present invention can also have any other section, shape and dimensions. The filtration channel can for example be open at the top side. A closed section however has the advantage that larger volumes of rainwater can be processed without increasing the risk that rainwater flows out of the filtration channel 3 without flowing through the filtration element 7. Although also other sections are possible for the filtration channel 3, such as for example square, rectangular, polygonal, etc., a round section has the advantage that solid ingredients stay behind in the filtration channel 3, for example behind a corner, less easily.

The filtration element 3 shown in figure 1 leaves room open at the top side between the ends 17, 18 of the in and outlet channel 2, 4 and the first and second end 11, 12 of the filtration channel 3. This is however not required and one or none of the first or second ends 11, 12 of the filtration channel 3 can also connect in a sealing way to the corresponding end 17, 18 of the in- and outlet channel 2, 4.

The guiding surface 5 shown in figure 1 is substantially smooth in order to guarantee a good flow-through of the collected rainwater and to avoid solid parts of the steam of collected rainwater preventing an easy passage of the collected rainwater along the guiding surface 5. This is however not required for the invention and the guiding surface 5 can also have corners and edges.

The filtration element 7 shown in figure 1 is shaped like a net-shaped flat element which is installed over an opening made in the bottom side of the filtration channel 3. The meshes of the net are thereby adapted to the required purity of the second part of the rainwater wherein smaller meshes ensure an increased purity of the second part of the rainwater and larger meshes offer a more mediocre purity of the second part of the rainwater. The meshes of the net preferably have a diameter of between 200 micron - 2000 micron, more preferably 300 micron - 900 micron, most preferably 400 micron - 800 micron. The net preferably comprises a metal, more preferably a stainless metal, such as inox, stainless steel, etc. but it can also be made out of different materials such as for example plastic, such as for example polyethylene, polypropylene, PVC, etc. Also a mixture of multiple materials can be used such as for example a mixture of a metal with a plastic, such as for example polyethylene and inox.

The filtration element can also comprise several nets, such as for example a first net with meshes of a first diameter and a second net with meshes of a second diameter. Also, the several nets can comprise different materials. It is for example possible to combine a plastic first net with meshes of micron with a second metal net with meshes of micron by for example laying them on top of each other.

Preferably the filtration element 7 can be lifted out of the surface of the guiding surface 5. This has the advantage that the filtration element 7 can be easily cleaned or replaced. Since in this way the filtration element 7 can be easily replaced by a filtration element 7 with different characteristics, the rainwaterfiltersystem 1 according to the present invention can be adapted to the specific situation in which it is employed since for example the diameter of the meshes of the net, the material of the net, etc. can be adapted to the specific situation.

The filtration channel 3 shown in figure 1 has two identical filtration elements 7. It is however also possible to provide a filtration channel 3 with a single filtration element 7 or multiple filtration elements 7 such as for example three, four, five, six, seven, eight or even more. Although the two filtration elements 7 shown in figure 1 are identical, the filtration elements can also be different regarding shape, dimensions, positioning in the filtration channel, etc. Also the nature of the filtration element 7 can differ. As such, different sorts of nets can be used in different filtration elements, for example nets with a different diameter of the meshes of the net, or filtration system alternatives to nets. For example the filtration element 7 that is installed first according to the guiding direction 6 can have meshes of a larger diameter than the filtration element that is installed further according to the guiding direction 7 in order to better adapt the filtration characteristics of the filtration elements to the characteristics of the collected rainwater while it flows through the filtration channel 3.

The filtration channel 3 is preferably installed in a removable way between the inlet channel 2 and the outlet channel 4. This is however not required for the invention and the filtration channel can also be connected to the in and outlet channel 2, 4 for example by means of a welded joint.

Preferably the filtration channel is installed in a clamp-fit way between the in- and outlet channel 2, 4. In figure 1 the cooperating set of rib and groove 13, 14 are thereto implemented as such that such a connection of the filtration channel 3 between the in- and outlet channel 2, 4 can be realized.

The filtration channel 3 however does not have to be installed in a clamp-fit way and can also be installed between the in- and outlet channel 2, 4, for example by means of screws, bolts, brackets, joints, etc.

Preferably the filtration channel is installed in a removable way along an upward direction. This is however not required for the present invention and the filtration channel 3 can also be installed in a removable way in different ways, for example removable in a sideways direction or removable in a downward direction. It appeared that an installation that uses a first 9 and a second 10 protruding part of respectively the in- and outlet channel as described here above and shown in figure 1 is excellently configured for an installation of the filtration channel 3 between the in- and outlet channel 2, 4 that is easily removable, wherein the filtration channel 3 can be removed from between the in- and outlet channel 2, 4 in an upward direction. Combined with the clamping-fit connection of the filtration channel 3 between the in- and outlet channel 2, 4, it appeared that additional fastening means such as for example screws and bolts can be dropped in order to provide a sufficiently solid and secure connection of the filtration channel 3 between the in- and outlet channel 2, 4.

By further providing a handle 15, as is shown in figure 1, disassembling of the filtration channel 3 can be further simplified, especially if no additional assembling means such as bolts, screws, etc. were used. If the filtration element still has to be cleaned in the course of time, the filtration channel 3 can be easily lifted from between the in- and outlet channel.

The filtration channel 3 shown in figure 1 has the advantage that it can be made by injection molding. This is however not required for the present invention and the filtration channel 3 can also be produced in different way. For example by attaching different tube-shaped elements, or element parts, to each other, by for example bolts, joints, brackets, et.

Preferably the inlet channel 2, the filtration channel 3 and the outlet channel 4 are all implemented in a tube-shape as is shown in figure 1. Other embodiments wherein the inlet channel 2, the filtration channel 3 and the outlet channel 4 are implemented differently, wherein for example dimensions, section, shape of the different channels can be implemented differently, are however also possible. The shape and dimensions of the in- and outlet channel 2, 4 and the filtration channel 3 are preferably adapted such that the filtration channel 3 can be installed more easily between the in- and outlet channel 2, 4.

In the rainwaterfiltersystem 1 according to the present invention, the filtration element 7 is installed in a bowl-shaped part 8 of the guiding surface 5. The bowl-shaped part 8 is thereby curved in the guiding direction 6 of the collected rainwater and is provided to keep unpurified rainwater at least temporarily above the filtration element 7.

The further characteristics of the bowl-shaped part 8, such as dimensions shape, etc. can be determined by the person skilled in the art in function of for example the dimensions of the inlet channel 2, the outlet channel 4 and the filtration channel 3, the quantity of rainwater that can be kept above the filtration element, the filtration capacity of the filtration element 7, etc.

The bowl-shaped part 8, shown in figure 1, is installed in the guiding surface 5 of the inlet channel 2, the outlet channel 4 and the filtration channel 3 together. More specifically, the bowl-shaped part is shaped by a lowering in the inlet channel 2, more specifically at the end 17 of the inlet channel 2, more specifically at the first end 9 of the inlet channel 2, and another lowering at the outlet channel 4, more specifically at the end 18 of the outlet channel 4, more specifically at the first protruding part 10 of the outlet channel 4. The guiding surface 5 of the filtration channel 3 is hereby implemented substantially fiat. This is however not required and the bowl-shaped part 8 can for example also be implemented only in the guiding surface 5 of the filtration channel 3, the guiding surface 5 of the inlet channel 2 and the filtration channel 3, the guiding surface 5 of the outlet channel 4 and the filtration channel 3, etc.

Preferably the bowl-shaped part 8 comprises a considerable part of the length of the filtration channel 3, as is shown in figure 1. This id however not required and the bowl-shaped part 8 can also only comprise a part of the filtration channel 3, for example when the bowl-shaped part 8 extends over a part of the filtration channel 3.

More preferably at least one filtration element 7 substantially covers the full surface of the bowl-shaped part 8 in order to increase the filtration capacity. More preferably the at least one filtration element 7 extends to a further position than the bowl-shaped part 8, along the guiding direction 6 and/or along a direction transversally to the guiding direction 6 in order to increase the filtration capacity even further. The filtration channel 3 shown in figure 1 is for example provided along substantially its entire length with at least one filtration element 7. This at least one filtration element 7 also extends to above the bowl-shaped part 8 along a direction transversally to the guiding direction 6.

Preferably the filtration element 7 is substantially provided on a positon that comprises the substantially lowest point of the bowl-shaped part 8 after installation of the filtration channel 3 between the inlet channel 2 and the outlet channel 4. Since the filtration channel 3 in figure 1 is substantially installed horizontally between the in- and outlet channel 2, 4, and the bowl-shaped part 8 is shaped by a lowering in the ends 17, 18 of the respectively in- and outlet channel 2, 4 this lowest point is formed by substantially the entire guiding surface 5 of the filtration channel 3. This is however not required and the lowest point can only be provided locally in the filtration channel 3, for example when the filtration channel 3 is installed inclined or when the bowl-shaped part 8 is shaped differently, for example only in the guiding surface 5 of the filtration channel 3.

The rainwaterfiltersystem 1 as shown in figure 1 and described in detail here above is usually installed above a water-collecting area, usually a manhole, into which the rainwater purified by the rainwaterfiltersystem, the rainwater of the second part, is collected. In such an arrangement, the inlet channel 2 is built in first side wall of the water-collecting area and the outlet channel is built in an opposite side wall of the water-collecting area. In the water-collecting area further means are provided to further transport the second part to the place of use. It is however also possible to connect the rainwater filter system 1 according to the present invention to the further transport system so that the rainwater of the second part is not first collected in a water-collecting area such as a manhole, but is collected directly in a transporting tube which further transports it to the place of use. In such a case, the filtration channel is preferably adapted to be connected to the filtration element onto for example the transporting tube.

Although it is not shown in figure 1, the filtration channel can also comprise a sand box, for example installed along the guiding direction 6 before the filtration element 7, although this is not required for the present invention. Preferably such a sand box is provided in the bowl-shaped part 8. The sand box can for example be shaped as a recess in the bowl-shaped part 8, for example a substantial recess of 10 cm. The invention has found that such a recess has the result that sand can sediment into the recess because of a lack of turbulence in the recess. The supply of water to the filtration element 7 however remains substantially uninterrupted since the supplied water can flow over the water in the sand box.

## Claims

1. Rainwaterfiltersystem for at least partially filtering of collected rainwater, having an inlet channel (2) for supplying collected rainwater to a filtration channel (3) for guiding a first part of the collected rainwater of the inlet channel (2) to an outlet channel (4) along a guiding surface (5) of the inlet, filtration and outlet channel (2,3,4) for guiding the collected rainwater along a guiding direction (6) and filtering and guiding of a second part of the collected rainwater through a filtration element (7) positioned on the surface of the guiding surface (5), **characterized in that** the filtration element (7) is installed in a bowl-shaped part (8) of the guiding surface (5), the bowl-shaped part (8) being curved in the guiding direction (6) of the water, and being provided to keep unpurified collected rainwater at least temporary above the filtration element (7).

2. Rainwaterfiltersystem according to claim 1, **characterized in that** the guiding surface (5) is substantially smooth.

3. Rainwaterfiltersystem according to any one of the previous claims, **characterized in that** the bowl-shaped part is deeper than the average thickness of the surrounding guiding surface (5).

4. Rainwaterfiltersystem according to claim 3, **characterized in that** the bowl-shaped part is at least two times deeper than the average thickness of the surrounding guiding surface (5).

5. Rainwaterfiltersystem according to claim 4, **characterized in that** the bowl-shaped part is at least 3 times deeper than the average thickness of the surrounding guiding surface (5).

6. Rainwaterfiltersystem according to any one of the previous claims **characterized in that** the filtration element (7) is substantially provided on a position which, after installation of the filtration channel (3) between the inlet channel (2) and the outlet channel (4), substantially comprises the lowest point of the bowl-shaped part (8).

7. Rainwaterfiltersystem according to any one of the previous claims, **characterized in that** the filtration channel (3) is installed in a removable way between the inlet channel (2) and the outlet channel (4).

8. Rainwaterfiltersystem according to claim 7, **characterized in that** the filtration channel (3) is installed in a clamp-fit way between the inlet channel (2) and the outlet channel (4).

9. Rainwaterfiltersystem according to claim 8 or 9, **characterized in that** the filtration channel is installed in a removable way according to a substantially upward direction.

10. Rainwaterfiltersystem according to any one of the previous claims, **characterized in that** the filtration channel (3) is connected to the inlet channel (2) along the guiding surface (5) by a first protruding part (9) of the inlet channel (2) onto which a first end (11) of the filtration channel (3) rests.

11. Rainwaterfiltersystem according to any one of the previous claims, **characterized in that** the filtration channel (3) is connected to the outlet channel (4) along the guiding surface (5) by a second protruding part (10) of the outlet channel (4) onto which a second end (12) of the filtration channel (3) rests.

12. Rainwaterfiltersystem according to claim 10 or 11, **characterized in that** the first and/or second protruding part (9,10) and the first and/or second end (11,12) comprise a cooperating set of a rib and a groove (13,14) for the installation of the filtration channel (3) to the in- and/or outlet channel (2,4).

13. Rainwaterfiltersystem according to claim 12, **characterized in that** the cooperating set of the rib and the groove (13,14) are provided with a sealing.

14. Rainwaterfiltersystem according to any one of the previous claims, **characterized in that** the rainwaterfiltersystem is substantially implemented in a tube-shape.

15. Rainwaterfiltersystem according to any one of the previous claims, **characterized in that** the filtration channel (3) comprises a handle (15).
